# EUROPEAN PATENT APPLICATION

(11) **EP 2 688 031 A1**
(43) Date of publication of application: **22.01.2014**
(21) Application number: 13176956.4
(22) Date of filing: 18.07.2013
(51) Int. Cl.: G06Q 30/02, G06Q 50/00

(54) **Social networking system and method, in particular for customizing content delivery from a brand page to a user in a social networking environment**

(30) Priority: 19.07.2012 US 201213553570; 26.09.2012 US 201213627857
(71) Applicant: Facebook, Inc., Menlo Park, CA 94025 (US)
(72) Inventor: Garcia-Martinez, Antonio, Menlo Park, CA 94025 (US); Mathur, Nipun, Menlo Park, CA 94025 (US)
(74) Representative: Schröer, Gernot H.

(57) **Abstract**

A page experience of a user of a social networking system can be tailored to match the interests of the user. Content providers or page administrators of a brand page associate targeting criteria with content posted to the brand page. The targeting criteria defines a characteristic of a social networking system user to receive the content. User profiles of social networking system users to whom the brand page is connected are accessed and used to identify users having the characteristic defined by the targeting criteria. The content posted to the brand page is presented to the users connected to the brand page and having the characteristic defined by the targeting criteria.

## Description

### BACKGROUND

Embodiments of the present disclosure relate generally to a social networking system and a computer-implemented method, more specifically, to targeted distribution of content items to users of a social networking system.

Social networks, or social utilities that track and enable connections between users (including people, businesses, and other entities), have become prevalent in recent years. In particular, a social networking system allows users to more efficiently communicate information that is relevant to their friends or other connections in the social network. Social networks typically incorporate a system for maintaining connections among users in the social network and links to content that are likely to be relevant to the users. Social networks also collect and maintain information about the users of the social network. This information may be static, such as geographic location, employer, job type, age, music preferences, interests, and a variety of other attributes, or it may be dynamic, such as tracking a user's actions within the social network. This information can then be used to target information delivery so that information more likely to be of particular interest to a user can be communicated to that user.

While social networking systems allow people to exchange information with each other, they also allow entities to provide information to users of the social networking system. Examples of entities include businesses, organizations and celebrities. An entity may create a brand page, which is associated with a profile, within the social networking system and post content items to the brand page. The social networking system then communicates the posted content item or a description of the posted content item to social networking system users connected to the brand page. Hence, the brand page allows the entity to act as any other user of the social networking system and disseminate information to social networking system users.

However, various types of entities have audiences composed of segments, wherein each segment has a particular interest in the entity. In the social networking context, different social networking system users may have different levels of interest in different content posted to the brand page. For example, users connected to a brand page associated with a sporting goods supplier have varying degrees of interest in posts on the brand page about products for different sports. Conventionally, users connected to a brand page are notified of content posted to the brand page without accounting for differing levels of interest in different content posted to the brand page.

### SUMMARY

To better customize interaction between a brand page that is associated with an entity and stored on a social networking system, content posted to the brand page is associated with targeting criteria defining at least one characteristic of a user of the social networking system. The targeting criteria are used to direct content to users of the social networking system for whom the content posted to the brand page is of particular interest. In one embodiment, user profiles of social networking system users to whom the brand page is connected are accessed and used to determine whether a viewing user to whom the brand page is connected has the at least one characteristic defined by the targeting criteria. If the viewing user to whom the brand page is connected has the characteristic, the content posted to the brand page corresponding to the at least one characteristic is presented to the viewing user.

For example, a page administrator for a brand page associated with a sporting goods supplier posts a story about a tennis clinic to the brand page and associates the story with targeting criteria to identify users with an interest in "tennis" in their user profiles. A user profile, or an action log, of a social networking system user connected to the brand page is accessed and used to determine whether the user has an interest in "tennis." For example, the user has the characteristic if "tennis" is listed as an interest in the user profile. If the user has the characteristic, the content posted to the brand page corresponding to that characteristic is presented to the user. In this example, the content posted to the brand page is sent to an electronic device associated with the user or a summary of the content posted to the brand page is send to the electronic device associated with the user. As another example, the content posted the brand page is displayed to the user when the user views the brand page, but is not displayed when a user that does not have the characteristic views the brand page.

A social networking system according to one aspect of the invention comprises:
- a content store for storing a brand page associated;
- a user profile store for storing user profiles of users and a set of connections among the users, one or more of the user profiles including a connection to the brand page;
   wherein the content store is adapted to receive content for posting to the brand page, the content being associated with targeting criteria that defines an interest of a user of the social networking system;
- a content selector for accessing the one or more user profiles including the connection to the brand page and for determining whether a user profile of a viewing user from the one or more user profiles including the connection to the brand page has the interest defined by the targeting criteria based in part on the user profile of the viewing user;
wherein the content store is adapted to deliver the content to the brand page to an electronic device associated with the viewing user responsive to determining that the user profile of the viewing user has the interest.

Preferably the user profile store is adapted to store keywords associated with user profiles and wherein the content selector is adapted to match a keyword of the user profile of the viewing user with a keyword in the targeting criteria for determining whether the user profile of the viewing user has the interest defined by the targeting criteria.

In a further embodiment the system comprises:
- an action logger for storing data describing one or more actions performed by a viewing user, in particular interactions between the viewing user and the brand page, in an action log, the stored data being associated with the user profile of the viewing user;
   wherein the content selector is adapted to determine whether the user profile of the viewing user has the interest defined by the targeting criteria based on the actions performed by the user.

Furthermore, the system preferably comprises:
a news feed manager being adapted to communicate with a plug-in, preferably being installed on a third party website, for publishing the content received by the content store.

In another embodiment the system comprises:
a display generator for determining when a viewing user has requested information to be displayed, the display generator being adapted to cooperate with the content selector for determining whether a user profile of a viewing user from the one or more user profiles including the connection to the brand page has the interest defined by the targeting criteria based in part on the user profile of the viewing user and for delivering the content by modifying the appearance of the brand page.

A computer-implemented method according to another aspect of the invention is, in particular for use in a system according to the invention and comprises:
storing, in a social networking system, a brand page associated with an entity;
storing one or more user profiles of users of the social networking system and a set of connections among the users, one or more of the user profiles including a connection to the brand page;
receiving content for posting to the brand page, the content associated with targeting criteria that defines an interest of a user of the social networking system;
responsive to receiving the content for posting to the brand page, accessing the one or more user profiles including the connection to the brand page;
determining whether a user profile of a viewing user from the one or more user profiles including the connection to the brand page has the interest defined by the targeting criteria based in part on the user profile of the viewing user; and delivering, in particular by transmitting a message, the content to the brand page to an electronic device associated with the viewing user responsive to determining that the user profile of the viewing user has the interest.

Preferably delivering the content comprises:
displaying the content on the brand page when the viewing user accesses the brand page with the electronic device.

In particular, displaying the content on the brand page when the viewing user accesses the brand page comprises:
displaying the content so that the content is visually distinguishable from second content associated with targeting criteria defining the interest that is not included in the user profile of the viewing user.

In an advantageous embodiment determining whether the user profile of the viewing user has the interest defined by the targeting criteria comprises:
matching, in particular string matching, a keyword of the user profile of the viewing user with a keyword in the targeting criteria.

In a further embodiment the computer-implemented method comprises:
storing data describing one or more interactions between the viewing user and the brand page in an action log, the stored data associated with the user profile of the viewing user.

Preferably delivering the content to the electronic device associated with the viewing user comprises:
delivering a story associated with the content to the electronic device associated with the viewing user.

Further preferably determining whether the user profile of the viewing user has the characteristic defined by the targeting criteria comprises:
accessing an/the action log including actions performed by the viewing user; and
determining whether the user profile of the viewing user has characteristics defined by the targeting criteria based on the actions performed by the viewing user and based on the user profile of the viewing user.

In another embodiment of the computer-implemented method the characteristic comprises an interest and/or a demographic information and/or a membership in a group of users of the social networking system and/or an action taken by the viewing user, in particular an action taken by the viewing user comprises an interaction between the viewing user and the brand page.

According to another aspect of the invention a computer-readable storage medium is provided storing executable computer program instructions, the instructions implementing the according to the invention.

### BRIEF DESCRIPTION OF DRAWINGS

FIG. 1 is an event diagram illustrating a process for selecting content to provide on a display to a user, in accordance with an embodiment of the invention.

FIG. 2 is a network diagram of a system for providing content items to users of a social networking system, in accordance with an embodiment of the invention.

FIG. 3 is a block diagram of a social networking system, in accordance with an embodiment of the invention.

FIG. 4 is an interaction diagram of a process for selecting content items for display, in accordance with an embodiment of the invention.

FIG. 5 is a flow chart of a process for selecting content items, in accordance with an embodiment of the invention.

FIGS. 6A-6C are illustrations of page views in a social networking system that have been personalized, in accordance with an embodiment of the present disclosure.

The figures depict various embodiments of the present invention for purposes of illustration only. One skilled in the art will readily recognize from the following discussion that alternative embodiments of the structures and methods illustrated herein may be employed without departing from the principles of the invention described herein.

### DETAILED DESCRIPTION

### Overview

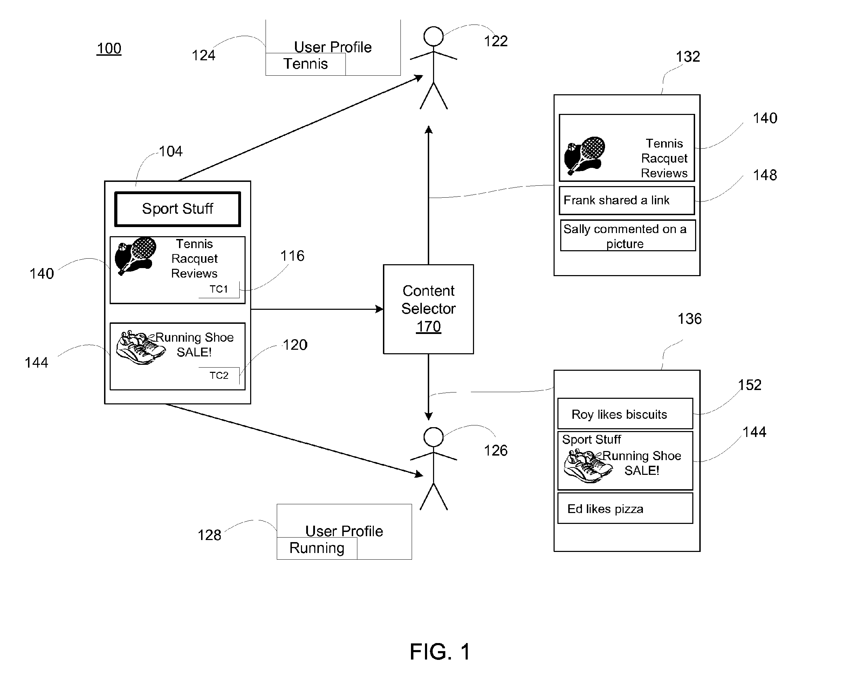

FIG. 1 shows an example of targeting content posted to a brand page to social networking system users. In FIG. 1, a first content item 140 and a second content item 144 are posted to a brand page 104, which is stored by a social networking system 100. An entity may generate and maintain the brand page 104 to post information about itself, about its products or to provide other information to users of the social networking system 100. Examples of content an entity may post to the brand page 104 include: stories about services or products offered by the entity, pictures of the entity, pictures of products and/or services offered by the entity, new product introductions, product sales, stories of products in use, promotional offers for products or services, articles and/or reviews describing a product or service offered by the entity or other suitable information. In FIG. 1, a first content item 140 and a second content item 144 are depicted as posted to the brand page 104. The first content item 140 and the second content item 144 may be presented to social networking users viewing the brand page 104 in a variety of ways. For example, the content items 140, 144 are displayed on the brand page 104, are included in a news feed story sent to users connected to the brand page 104, are transmitted as one or more messages to users connected to the brand page 104 or are distributed using any suitable channel.

Social networking system users may connect to the brand page 104 to be updated when content items are posted to the brand page 104, to receive updates about the entity or other suitable information. For example, social networking system users may become friends with the brand page, follow the brand page, become a fan of the brand page or otherwise establish a connection with the brand page and/or its associated entity. Hence, the brand page 104 allows the entity to provide information about itself or its products and/or services to social networking system users to promote a relationship between the entity and social networking system users.

For purposes of illustration, the brand page 104 in FIG. 1 is associated with a sporting goods supplier, with the first content item 140 describing tennis racquets stocked by the sporting goods supplier and the second content item 144 describing running shoes sold by the sporting goods supplier. The first content item 140 is associated with first targeting criteria 116 and the second content item 144 is associated with second targeting criteria 120. Targeting criteria 116, 120 define one or more characteristics of a social networking system user to whom the entity desires to present a content item. For example, targeting criteria 116, 120 identifies one or more interests included a user profile (e.g., demographic information, affiliations with groups of the social networking system or other characteristics), as well as characteristics inferred from user actions taken on or off the social networking system.

In FIG. 1, the first targeting criteria 116 identifies a characteristic of "tennis" while the second targeting criteria 120 identifies a user characteristic of "running." A user is determined to have the characteristic identified by the first targeting criteria 120 if a user profile includes "tennis" as an interest. While the targeting criteria 116, 120 in FIG. 1 identify a single characteristic, in other embodiments, targeting criteria 116, 120 may identify any number of characteristics. In one embodiment, the targeting criteria 116, 120 is defined by the entity, which also associates the targeting criteria 116, 120 with one or more content items 140, 144. As shown in FIG. 1, different content items 140, 144 posted to the brand page 104 may be associated with different targeting criteria 116, 120.

In conventional social networking systems, users connected to a brand page 104 are presented with each content item 140, 144 posted to a brand page 140. For example a brand page 104 would conventionally send the first content item 140 and the second content item 144 to a user. So, a user connected to the brand page 104 with no interest in running, would be presented the running-focused second content item 144 as well as other content items from the brand page 104. Because different users connected to the brand page 104 have different interests, this may result in a user manually sifting through content items from the brand page 104 to identify content items of interest to the user.

By associating targeting criteria 116, 120 with content items 140, 144, an entity improves interaction between social networking system users and the brand page 104. Targeting criteria 116, 120 allows the entity to identify one or more characteristics of users to whom the entity desires a content item to be presented. In one embodiment, targeting criteria 116, 120 identifies information in a user profile of the social networking system identifying a characteristic of a user that the entity desires to receive a content item. For example, targeting criteria 116, 120 associated with a content item 140, 144 allows an entity to direct a content item 140, 144 to users having one or more characteristics specified by the targeting criteria 116, 120. Hence, the targeting criteria 116, 120 allow an entity to better customize content from a brand page 104 to social networking system users.

FIG. 1 illustrates use of targeting criteria 116, 120 to customize content items provided by a brand page 104 to social networking system users. In FIG. 1, a first user 122 and a second user 126 are connected to the brand page 104. The social networking system 100 also includes a first user profile 124 for the first user 122 and a second user profile 128 for the second user 126. FIG. 1 shows the first user profile 124 having a stored interest of "tennis" and the second user profile 128 having a stored interest of "running." However, the user profiles 124, 128 may also include additional information about the first and second users 122, 126.

In FIG. 1, the social networking system 100 includes a content selector 170, which receives the targeting criteria 116, 120 from the brand page 104 and compares user profile information for users connected to the brand page 104 to the targeting criteria 116, 120. In one embodiment, the content selector 170 also receives a content identifier from the brand page 104 identifying the content item associated with targeting criteria 116, 120. The content selector 170 then delivers a content item to users connected to the brand page 104 that have one or more characteristics identified by the targeting criteria. In the example of FIG. 1, the content selector 170 delivers the first content item 140 to the first user 122, because the first user profile 124 identifies "tennis" as an interest of the first user 122, satisfying the first targeting criteria 116. Similarly, the content selector 170 delivers the second content item 144 to the second user 126, as the second user profile 128 identifies "running" as a interest of the second user 126, which satisfies the second targeting criteria 120.

The example of FIG. 1 also illustrates customization of content displayed to the first user 122 and to the second user 132. For purposes of illustration, FIG. 1 shows a first news feed 132 delivered to the first user 122 and a second news feed delivered to the second user 136. However, in various embodiments content may be delivered to the first user 122 and to the second user 126 in a variety of ways, such as via messages to the users 122, 126, modification of the brand page 104 appearance when accessed by the users 122, 126 or any other suitable distribution mechanism.

In FIG. 1, the first user 122 has an interest in "tennis," which is the characteristic specified by the first targeting criteria 116. Hence, the first content item 140 is included in the first news feed 132 in addition to additional stories 148, which may describe actions taken by other social networking users connected to the first user 122. As shown in FIG. 1, the first news feed 132 does not include the second content item 120 because the first user 122 does not have an interest in "running," as specified by the second targeting criteria 120. In other embodiments, the first news feed 132 may also include the second content item 120 in a less-prominent location than the first content item 140. For example, the first content item 140 is positioned at the top of the first news feed 132 or is otherwise visually distinguished from the second content item 144.

Similarly, the second news feed 136 in FIG. 1 includes the second content item 144 because the second user 126 has an interest in running, as specified by the second targeting criteria 120. The second news feed 136 also includes additional stories 152 describing actions of other users connected to the second user 126. In various embodiments, the second news feed 126 may visually distinguish the second content item 144 from the additional stories 152.

Hence, FIG. 1 shows use of targeting criteria 116, 120 to customize the content items from a brand page 104 appearing in news feeds for different users. In other embodiments, the targeting criteria 116, 120 allow additional types of customization, such as customizing the appearance of the brand page 104 when accessed by different users 122, 126 or customizing messages about content sent from the brand page 104 to different users 122, 126.

### System Architecture

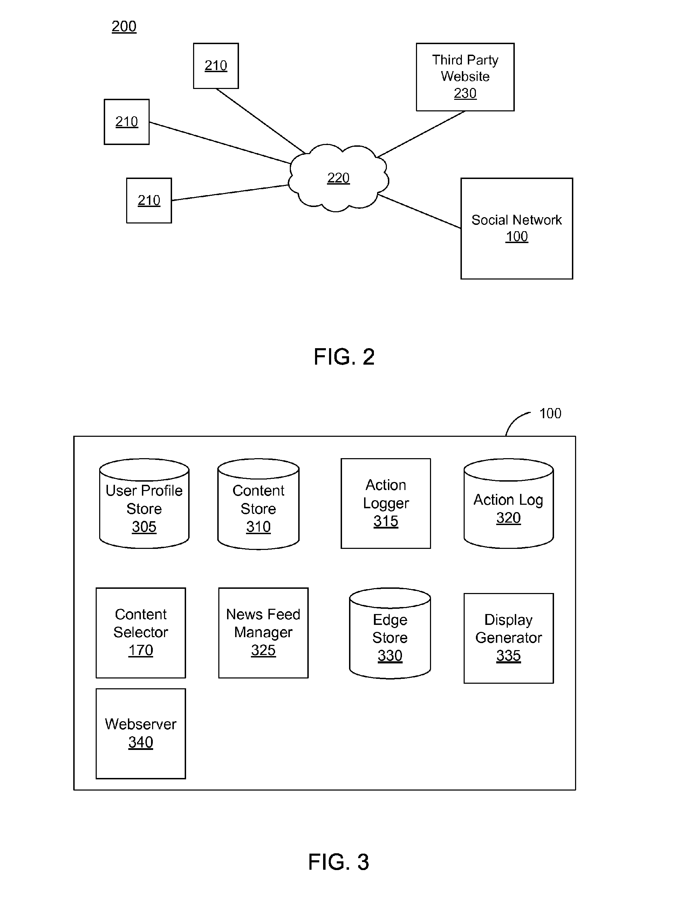

FIG. 2 is a high level block diagram illustrating a system environment 200 for a social networking system 100. The system environment 200 comprises one or more client devices 210, a network 220, one or more third-party websites 230 and the social networking system 100. In alternative configurations, different and/or additional components may be included in the system environment 200. The embodiments described herein can be adapted to online systems that are not social networking systems.

The client devices 210 comprise one or more computing devices capable of receiving user input as well as transmitting and/or receiving data via the network 220. In one embodiment, a client device 210 is a conventional computer system, such as a desktop or laptop computer. In another embodiment, a client device 210 may be a device having computer functionality, such as a personal digital assistant (PDA), mobile telephone, smart-phone or similar device. A client device 210 is configured to communicate via the network 220. In one embodiment, a client device 210 executes an application allowing a user of the client device 210 to interact with the social networking system 100. For example, a client device 210 executes a browser application to enable interaction between the client device 210 and the social networking system 100 via the network 220. In another embodiment, a client device 210 interacts with the social networking system 100 through an application programming interface (API) that runs on the native operating system of the client device 210, such as iOS® or ANDROID™.

The client devices 210 are configured to communicate via the network 220, which may comprise any combination of local area and/or wide area networks, using both wired and wireless communication systems. In one embodiment, the network 220 uses standard communications technologies and/or protocols. Thus, the network 220 may include links using technologies such as Ethernet, 802.11, worldwide interoperability for microwave access (WiMAX), 3G, 4G, CDMA, digital subscriber line (DSL), etc. Similarly, the networking protocols used on the network 220 may include multiprotocol label switching (MPLS), transmission control protocol/Internet protocol (TCP/IP), User Datagram Protocol (UDP), hypertext transport protocol (HTTP), simple mail transfer protocol (SMTP) and file transfer protocol (FTP). Data exchanged over the network 220 may be represented using technologies and/or formats including hypertext markup language (HTML) or extensible markup language (XML). In addition, all or some of links can be encrypted using conventional encryption technologies such as secure sockets layer (SSL), transport layer security (TLS), and Internet Protocol security (IPsec). The third party website 230 may be coupled to the network 220 for communicating with the social networking system 100, which is further described below in conjunction with FIG. 3.

FIG. 3 is an example block diagram of a system architecture of the social networking system 100. The social networking system 100 includes a user profile store 305, a content store 310, an action logger 315, an action log 320, a content selector 170, a newsfeed manager 325, an edge store 330, a display generator 335, and a web server 340. In other embodiments, the social networking system 100 may include additional, fewer, or different modules for various applications. Conventional components such as network interfaces, security functions, load balancers, failover servers, management and network operations consoles, and the like are not shown so as to not obscure the details of the system architecture.

Each user of the social networking system 100 is associated with a user profile, which is stored in the user profile store 305. A user profile includes declarative information about the user that was explicitly shared by the user, and may also include profile information inferred by the social networking system 100. In one embodiment, a user profile includes multiple data fields, each data field describing one or more attributes of the corresponding user of the social networking system 100. The user profile information stored in user profile store 305 describes the users of the social networking system 100, including biographic, demographic, and other types of descriptive information, such as work experience, educational history, gender, hobbies or preferences, location and the like. A user profile may also store other information provided by the user, for example, images or videos. In certain embodiments, images of users may be tagged with identification information of users of the social networking system 100 displayed in an image. A user profile in the user profile store 305 may also maintain references to actions by the corresponding user performed on content items in the content store 310 and stored in the action log 320.

While user profiles in the user profile store 305 are frequently associated with individuals, allowing people to interact with each other via the social networking system 100, user profiles may also be stored for entities such as businesses or organizations. This allows an entity to establish a presence on the social networking system 100 for connecting and exchanging content with other social networking system users. The entity may post information about itself, about its products or provide other information to users of the social networking system using a brand page associated with the entity's user profile. Other users of the social networking system may connect to the brand page to receive information posted to the brand page or to receive information from the brand page. A user profile associated with the brand page may include information about the entity itself, providing users with background or informational data about the entity.

Content store 310 stores content items associated with a user profile, such as images, videos and audio files. Content items from the content store 310 may be displayed when a user profile is viewed or when other content associated with the user profile is viewed. For example, displayed content items may show images or video associated with a user profile or show text describing a user's status. Additionally, other content items may facilitate user engagement by encouraging a user to expand his connections to other users, to invite new users to the system or to increase interaction with the social networking system 100 by displaying content related to users, objects, activities, or functionalities of the social networking system 100. Examples of social networking content items include suggested connections or suggestions to perform other actions, media provided to, or maintained by, the social networking system 100 (e.g., pictures or videos), status messages or links posted by users to the social networking system, events, groups, pages (e.g., representing an organization or commercial entity), and any other content provided by or accessible via the social networking system.

The content store 310 may also include one or more brand pages associated with user profiles of entities. A brand page comprises content associated with the entity and instructions for presentation of the content to a social networking system user. For example, a brand page identifies content associated with the entity's user profile as well as information describing how to present the content to users viewing the brand page. The content item store 310 may also store one or more targeting criteria that associated with each content item in the store. The targeting criteria identifies one or more characteristics of a user to whom a content item is to be delivered.

The action logger 315 receives communications about user actions on and/or off the social networking system 100, populating the action log 320 with information about user actions. Such actions may include, for example, adding a connection to another user, sending a message to another user, uploading an image, reading a message from another user, viewing content associated with another user, attending an event posted by another user, among others. In some embodiments, the action logger 315 identifies interaction between a social networking system user and a brand page within the social networking system 100, which communicates targeting criteria associated with content on the brand page to the content selector 170 to customize content from the brand page. In addition, a number of actions described in connection with other objects are directed at particular users, so these actions are associated with those users as well. These actions are stored in the action log 320.

The action log 320 may be used by the social networking system 100 to track user actions on the social networking system 100, as well as external website that communicate information to the social networking system 100. Users may interact with various objects on the social networking system 100, including commenting on posts, sharing links, and checking-in to physical locations via a mobile device, accessing content items in a sequence or other interactions. Information describing these actions is stored in the action log 320. Additional examples of interactions with objects on the social networking system 100 included in the action log 320 include commenting on a photo album, communications between users, becoming a fan of a musician, adding an event to a calendar, joining a groups, becoming a fan of a brand page, creating an event, authorizing an application, using an application and engaging in a transaction. Additionally, the action log 320 records a user's interactions with advertisements on the social networking system 100 as well as other applications operating on the social networking system 100. In some embodiments, data from the action log 320 is used to infer interests or preferences of the user, augmenting the interests included in the user profile and allowing a more complete understanding of user preferences.

The action log 320 may also store user actions taken on external websites. For example, an e-commerce website that primarily sells sporting equipment at bargain prices may recognize a user of a social networking system 100 through social plug-ins that enable the e-commerce website to identify the user of the social networking system 100. Because users of the social networking system 100 are uniquely identifiable, e-commerce websites, such as this sporting equipment retailer, may use the information about these users as they visit their websites. The action log 320 records data about these users, including webpage viewing histories, advertisements that were engaged, purchases made, and other patterns from shopping and buying.

A news feed manager 325 selectively provides content to users of a social networking system 100 and records the consumption of content by users. In one embodiment, the news feed manager 325 generates stories for a user describing actions taken by other users of the social networking system 100 to whom the user is connected. In one example, the newsfeed generated by the news feed manager 325 for a user includes comments made by other users to whom the user is connected. In another example, the newsfeed generated includes content posted to the social network system 240 by other users of the social networking system to whom the user is connected or other actions taken by other users to whom the user is connected. New news feed stories generated for a user by the news feed manager may be ranked and stored by the social networking system 100. The news feed manager 325 may communicate with client devices 210 through the network 220 to provide content to users of the social networking system 100.

In one embodiment, a news feed manager 325 may provide content through a social plug-in, such as an iFrame, to a third party website 230 to provide content posted on the social networking system 100 about an entity associated with the third party website 230. As an example, a business entity creating a brand page on the social networking system 100 may desire to publish content items posted on the brand page's news feed in the social networking system 100 to a third party website 230 via a social plug-in installed on the third party website 230.

In one embodiment, an edge store 330 stores the information describing connections between users and other objects on the social networking system 100 in edge objects. Some edges may be defined by users, allowing users to specify their relationships with other users. For example, users may generate edges with other users that parallel the users' real-life relationships, such as friends, co-workers, partners, and so forth. Other edges are generated when users interact with objects in the social networking system 100, such as expressing interest in a page on the social networking system, sharing a link with other users of the social networking system, and commenting on posts made by other users of the social networking system. The edge store 330 stores edge objects that include information about the edge, such as affinity scores for objects, interests, and other users. Affinity scores may be computed by the social networking system 100 over time to approximate a user's affinity for an object, interest, and other users in the social networking system 100 based on the actions performed by the user. Multiple interactions between a user and a specific object may be stored in one edge object in the edge store 330, in one embodiment. In some embodiments, connections between users may be stored in the user profile store 310, or the user profile store 310 may access the edge store 330 to determine connections between users.

The web server 340 links the social networking system 100 via the network 220 to the one or more client devices 210, as well as to the one or more third party websites 230. The web server 340 serves web pages, as well as other web-related content, such as Java, Flash, XML and so forth. The web server 340 may provide the functionality of receiving and routing messages between the social networking system 100 and the client device 210, for example, instant messages, queued messages (e.g., email), text and SMS (short message service) messages, or messages sent using any other suitable messaging technique. A user may send a request to the web server 340 to upload information, for example, images or videos that are stored in the content store 310. Additionally, the web server 340 may provide API functionality to send data directly to native client device operating systems, such as iOS®, ANDROID™, webOS® or RIM.

The content selector 170 identifies content items from the content store 310 for presentation to social networking system users based on targeting criteria associated with content items and information stored in user profiles. In one embodiment, the content selector 170 selects content posted to a brand page that is delivered to a user by determining whether the user has a characteristic specified by the targeting criteria. For example, the content selector 170 compares an interest identified by a user profile with targeting criteria associated with the content.

In one embodiment, the content selector 170 communicates with the content store 310, the user profile store 305 and/or the action log 320 to identify content from a brand page for delivery to a social networking system user responsive to the user having a characteristic identified by targeting criteria associated with the content. As an example, the content selector 170 identifies one or more interests of a user connected to a brand page from a user profile associated with the user. In some embodiments, the content selector 170 may identify a user's interests based on interactions between the user and the brand page retrieved from the action log 320; this allows the content selector 170 to used brand-page specific interactions to ascertain a user's interest. The content selector 170 may communicate with the user profile store 305 to modify the user's profile to include an interest identified by the content selector 170 from user interaction with the brand page. For example, interactions between the user and content on the brand page associated with a keyword, or including a keyword, may cause the content selector 170 to determine that the user has an interest in the keyword and update the user profile store 305 accordingly.

Upon determining the user's interests, the content selector 170 determines whether one or more of the interests match criteria specified by targeting criteria associated with content items posted to the brand page. Content items associated with targeting criteria which match the user's interests are then delivered to the user by the content selector 170. Hence, the content selector 170 uses data from the user profile stores 305 and/or from the action log 320 to determine whether a user connected to a brand page has at least one characteristic specified by targeting criteria associated with content posted to the brand page. This allows customization of content delivered from the brand page to connected users to users based on characteristics of the users. Examples of content delivered to the user include promotional information provided by the entity describing products and services, product reviews, images or posts from other users describing interaction with the entity or other social objects describing the entity and/or products or services offered by the entity.

The display generator 335 determines when a user of the social networking system 100 has requested that information be displayed and, in cooperation with the content selector 170, displays content customized to the interests of the user. For example, a user may navigate to a brand page within the social networking system, and the display generator 335 modifies appearance of the brand page based on the content selector 170. In one embodiment, the display generator 335, retrieves content identified by the content selector 170 from the content store 310 and displays the retrieved content in order to provide the user with a page experience customized based on the user's profile or interests. For example, content items displayed when a user views the brand page are modified so that content items associated with targeting criteria that the user matches are more prominently displayed. The display generator 335 may provide a webpage or some other suitable display format to present content to the user via a client device 210. The display generator 355 may notify the content item selector 170 when the display has been generated in response to a request from the user.

### Selection of Content Items to Provide to Social Networking System Users

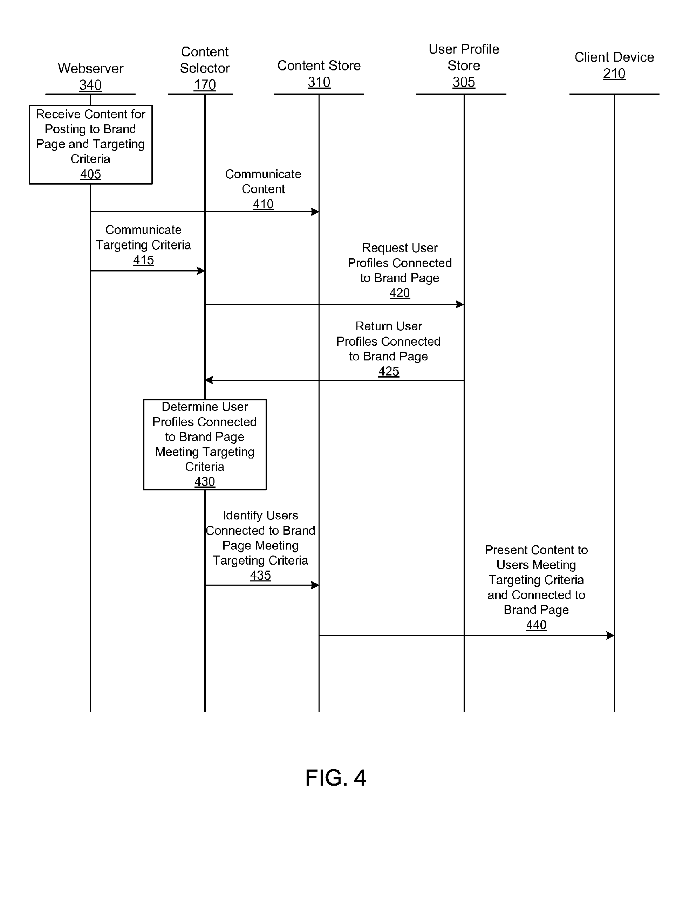

FIG. 4 illustrates an interaction diagram of a method for targeting content to a social networking system user. In one embodiment, the social networking system 100 receives 405 content for posting to a brand page via the web server 340. For example, the social networking system 100 receives articles, ads, videos, audio files or other content from an entity for posting to the brand page. In addition to the content, the web server 340 receives 405 targeting criteria associated with the content and describing one or more characteristics of a social networking system user to whom the content is to be presented. The content received by the web server 340 is communicated 410 to the content store 310, where it is stored. Similarly, the received targeting criteria are communicated 415 to the content selector 170.

The content selector 170 requests 420 one or more user profiles stored in the user profile store 305 and connected to the brand page. In one embodiment, the content selector 170 may also request user profiles based on other information, such as user profiles having user characteristics inferred from membership of the user in groups of the social network system, connections to other users, web-based transactions (such as browsing history, purchase history, etc.) or other suitable information. The user profile store 305 then returns 425 the user profiles to the content selector, and may return 425 additional information about the one or more users.

The content selector 170 determines 430 which users connected to the brand page meet the targeting criteria. In one embodiment, the content selector 170 determines whether a user profile includes a characteristic defined by the targeting criteria. For example, the content selector 170 determines 430 whether a user profile includes an interest matching the targeting criteria. Users connected to the brand page and having at least one characteristic defined by the targeting criteria are identified 435 to the content store 310. Content associated with the targeting criteria that the user matches is then presented 440 to a client device 210 associated with the users.

The content may be presented 440 from the content store 310 to a client device 210 in a variety of ways. For example, the content displayed to a user when the brand page is accessed is customized to be content associated with targeting criteria matching one or more characteristics of a user. Alternatively, a story describing the content items associated with targeting criteria that a user matches is sent to the user in a news feed. In another example, a message including a content item, or describing a content item, associated with the targeting criteria the user matches is sent to a client device 210 associated with the user.

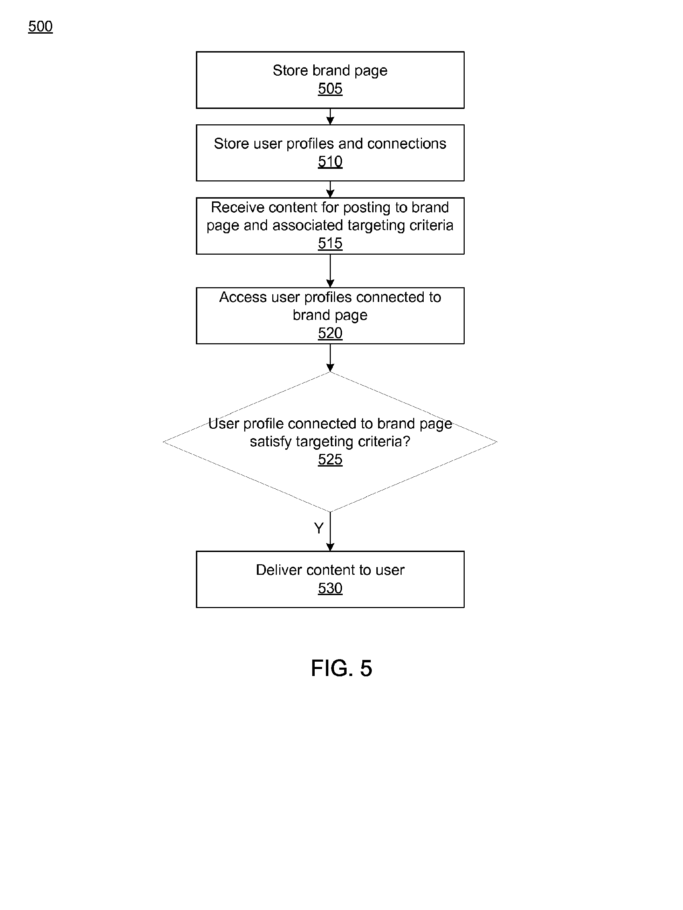

FIG. 5 shows a flow chart of one embodiment of a method 500 for targeting content to a social networking system user. A brand page associated with an entity is stored 505 by a social networking system 100. For example, the brand page is stored 505 in a content store 310 of the social networking system 100. The social networking system 100 also stores 510 user profiles for users of the social networking system as well as connections between the user profiles. One or more of the user profiles include a connection to the brand page. Content for posting to the brand page and targeting criteria associated with the content is received 515. The targeting criteria defines at least one characteristic of a social networking system user, such as an interest of a social networking system user. In one embodiment, the targeting criteria is specified by an entity associated with the brand page. Other examples of targeting criteria include a social networking system user posting content about an entity-specified topic or product, indicating a preference for a product or post (i.e., "liking" the product or post), sending a post to another social networking system user or any other interaction with the brand page or with content on the brand page.

One or more user profiles including a connection between the user and the brand page are accessed 520 and used by the social networking system 100 to determine 525 whether a user profile that is connected to the brand page has the characteristic defined by the targeting criteria. For example, the social networking system 100 determines 525 whether a user profile connected to the brand page has an interest matching an interest defined by targeting criteria or detrermines 525 whether an action log 320 indicates that a user has interacted with content posted to the brand page. Responsive to determining a user profile connected to the brand page includes satisfies the targeting criteria associated with content, the content is delivered 530 to an electronic device associated with the user having the user profile matching the targeting criteria and connected to the brand page.

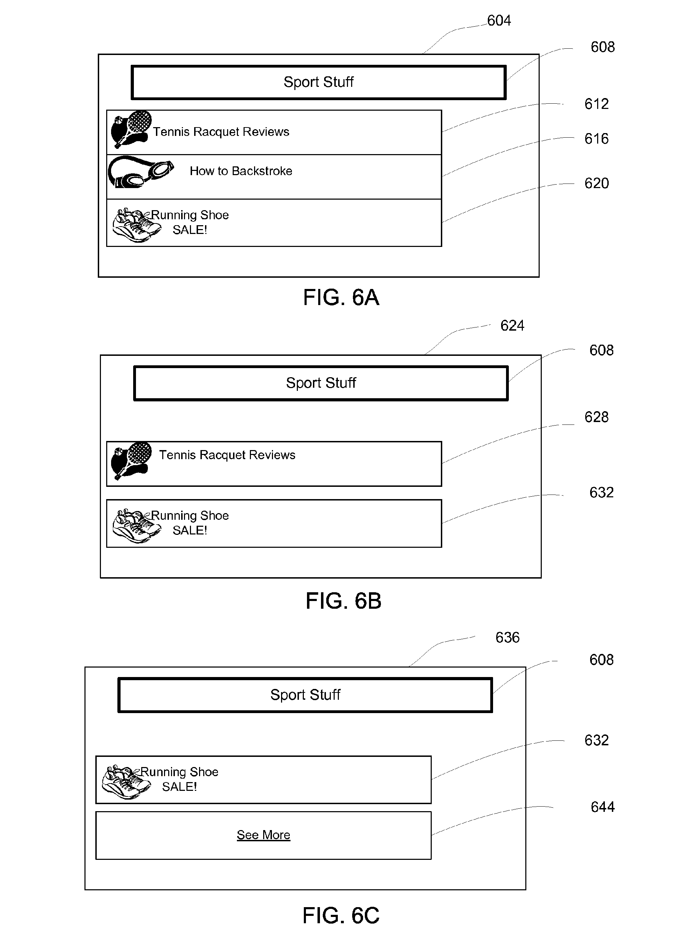

FIGS. 6A-C illustrate examples of modifying a brand page's appearance based on targeting criteria associated with content posted to the brand page. FIG. 6A is an example of a conventionally displayed brand page 604. In one embodiment, the conventionally displayed brand page 604 includes an entity identifier 608, such as a name, logo, image, video or other information identifying the entity associated with the conventionally displayed brand page 604. The conventionally displayed brand page 604 includes multiple content items 612, 616, 620. Frequently, the multiple content items 612, 616, 620 provide a diverse range of information, with some of the content items 612, 262, 620 being of little value to a social networking system user viewing the brand page. In the example of FIG. 6A, the brand page 604 is associated with a sporting goods supplier and the content items 612, 616, 620 describe various products offered by the sporting goods supplier. For example, a content item 612 provides reviews of tennis racquets for sale by the sporting goods supplier. Another content item 616 provides instructions for swimming techniques while an additional content item 620 advertises a current sale on running shoes by the sporting goods supplier.

Although different social networking system users likely have varying degrees of interest in the various sports described by the content items 612, 616, 620, a conventionally displayed brand page 604 shows each content item 612, 616, 620 to each viewing user. This may require the user to sort through several content items 612, 616, 620 to find interesting content.

FIG. 6B illustrates a brand page 624 customized for a viewing user based on targeting criteria associated with content items 628, 632. In FIG. 6B, the brand page 624 is customized to more prominently display content items associated with targeting criteria that the viewing user satisfies. For example, if the viewing user's profile includes an interest in tennis, content item 628, which is associated with targeting criteria defining an interest in tennis, is more prominently displayed. For example, the brand page 624 displays content item 628 near the top of the brand page 624, allowing the viewing user to more easily find content item 628. In FIG. 6B, the brand page 624 also displays another content item 632 associated with targeting criteria the viewing user does not meet, but less prominently displays the other content item 632. For example, the other content item 632 is displayed lower on the brand page 624, is displayed with reduced information or is otherwise distinguished from the content item 628 associated with targeting criteria that the user satisfies. In other embodiments, the other content item 632 may be obscured or not displayed to reduce the quantity of information presented to the viewing user.

FIG. 6C illustrates a brand page 636 customized for a viewing user based on targeting criteria associated with content items. In FIG. 6B, the brand page 636 is customized to reduce the display of content items associated with targeting criteria that a viewing user does not satisfy. For example, the brand page 636 displays a content item 632 associated with a targeting criteria specifying an interest in running when a viewing user's profile includes an interest in running. To increase the viewing user's attention to the content item 632, the brand page displays an additional content message 644 rather than display content items associated with targeting criteria that the viewing user does not match. The viewing user may see the additional content items by accessing the additional content message 644.

In some embodiments, a user profile may include information describing how a brand page's display is customized. For example, a user profile includes preference information indicating whether to customize the brand page as shown in FIG. 6B, FIG. 6C or to customize the band page in another suitable manner. Thus, customizing appearance of a brand page allows the brand page to make content more accessible to different users based on user characteristics. This customized presentation of content may increase user interaction with the brand page, promoting a stronger relationship between a user and the entity associated with the brand page.

### Summary

The foregoing description of the embodiments of the invention has been presented for the purpose of illustration; it is not intended to be exhaustive or to limit the invention to the precise forms disclosed. Persons skilled in the relevant art can appreciate that many modifications and variations are possible in light of the above disclosure.

Some portions of this description describe the embodiments of the invention in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all of the steps, operations, or processes described.

Embodiments of the invention may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Embodiments of the invention may also relate to a product that is produced by a computing process described herein. Such a product may comprise information resulting from a computing process, where the information is stored on a non-transitory, tangible computer readable storage medium and may include any embodiment of a computer program product or other data combination described herein.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based hereon. Accordingly, the disclosure of the embodiments of the invention is intended to be illustrative, but not limiting, of the scope of the invention, which is set forth in the following claims.

### Further subject-matter to be claimed

Further embodiments of the present invention may be summarized as follows. Any of these embodiments can be claimed in a separate claim, e.g. by substituting the word "Embodiment" by "Claim", in particular in the order as mentioned below and/or in any combination with any embodiment described above or with any of the features of the attached claims:

### Embodiment 1

A computer-implemented method comprising:
storing, in a social networking system, a brand page associated with an entity;
storing one or more user profiles of users of the social networking system and a set of connections among the users, one or more of the user profiles including a connection to the brand page;
receiving content for posting to the brand page, the content associated with targeting criteria that defines an interest of a user of the social networking system;
responsive to receiving the content for posting to the brand page, accessing the one or more user profiles including the connection to the brand page;
determining whether a user profile of a viewing user from the one or more user profiles including the connection to the brand page has the interest defined by the targeting criteria based in part on the user profile of the viewing user; and
delivering the content to the brand page to an electronic device associated with the viewing user responsive to determining that the user profile of the viewing user has the interest.

### Embodiment 2

The computer-implemented method of Embodiment 1, wherein delivering the content comprises:
displaying the content on the brand page when the viewing user accesses the brand page with the electronic device.

### Embodiment 3

The computer-implemented method of Embodiment 2, wherein displaying the content on the brand page when the viewing user accesses the brand page comprises:
displaying the content so that the content is visually distinguishable from second content associated with targeting criteria defining the interest that is not included in the user profile of the viewing user.

### Embodiment 4

The computer-implemented method of any of Embodiments 1 to 3, wherein delivering the content comprises:
including a story associated with the content in a news feed sent to the electronic device associated with the viewing user.

### Embodiment 5

The computer-implemented method of any of Embodiments 1 to 4, wherein delivering the content comprises:
transmitting a message including the content to the electronic device.

### Embodiment 6

The computer-implemented method of any of Embodiments 1 to 5, wherein determining whether the user profile of the viewing user has the interest defined by the targeting criteria comprises:
matching a keyword of the user profile of the viewing user with a keyword in the targeting criteria.

### Embodiment 7

The computer-implemented method of any of Embodiments 1 to 6, further comprising:
storing data describing one or more interactions between the viewing user and the brand page in an action log, the stored data associated with the user profile of the viewing user; and
updating the user profile of the viewing user to include a modified interest, the modified interest based on the one or more interactions between the viewing user and the brand page.

### Embodiment 8

A computer-implemented method comprising:
storing, in a social networking system, a brand page associated with an entity;
storing one or more user profiles of users of the social networking system and a set of connections among the users, one or more of the user profiles including a connection to the brand page;
receiving content for posting to the brand page, the content associated with targeting criteria that defines at least one characteristic of a user of the social networking system;
responsive to receiving the content for posting to the brand page, accessing the one or more user profiles including the connection to the brand page;
determining whether a user profile of a viewing user from the one or more user profiles including the connection to the brand page has the characteristic defined by the targeting criteria based in part on the user profile of the viewing user; and
responsive to the user profile of the viewing user including the connection to the brand page and responsive to determining the user profile of the viewing user has the characteristic, delivering the content to an electronic device associated with the viewing user.

### Embodiment 9

The computer-implemented method of Embodiment 8, wherein delivering the content to the electronic device associated with the viewing user comprises:
displaying the content on the brand page when the viewing user accesses the brand page with the electronic device.

### Embodiment 10

The computer-implemented method of Embodiment 9, wherein displaying the content on the brand page when the viewing user accesses the brand page comprises:
displaying the content so that the content is visually distinguishable from second content associated with targeting criteria defining the interest that is not included in the user profile of the viewing user.

### Embodiment 11

The computer-implemented method of any of Embodiments 8 to 10, wherein delivering the content to the electronic device associated with the viewing user comprises:
including a story associated with the content in a news feed sent to the electronic device associated with the viewing user.

### Embodiment 12

The computer-implemented method of any of Embodiments 8 to 11, wherein delivering the content to the electronic device associated with the viewing user comprises:
transmitting a message including the content to the electronic device.

### Embodiment 13

The computer-implemented method of any of Embodiments 8 to 12, wherein determining whether the user profile of the viewing user has the characteristic defined by the targeting criteria comprises:
matching a keyword of the user profile of the viewing user with a keyword in the targeting criteria.

### Embodiment 14

The computer-implemented method of any of Embodiments 8 to 13, wherein determining whether the user profile of the viewing user has the characteristic defined by the targeting criteria comprises:
accessing an action log including actions performed by the viewing user; and
determining whether the user profile of the viewing user has the characteristic defined by the targeting criteria based on the actions performed by the viewing user and based on the user profile of the viewing user.

### Embodiment 15

The computer-implemented method of any of Embodiments 8 to 14, wherein the characteristic comprises an interest.

### Embodiment 16

The computer-implemented method of any of Embodiments 8 to 15, wherein the characteristic comprises demographic information.

### Embodiment 17

The computer-implemented method of any of Embodiments 8 to 16, wherein the characteristic comprises membership in a group of users of the social networking system.

### Embodiment 18

The computer-implemented method of any of Embodiments 8 to 17, wherein the characteristic comprises an action taken by the viewing user.

### Embodiment 19

The computer-implemented method of Embodiment 18, wherein the action taken by the viewing user comprises an interaction between the viewing user and the brand page.

### Embodiment 20

A computer-implemented method comprising:
storing one or more user profiles of users of a social networking system and a set of connections among the users, one or more of the user profiles including a connection to a brand page in the social networking system;
accessing the one or more user profiles including the connection to the brand page;
determining whether a user profile of a viewing user from the one or more user profiles including the connection to the brand page has a characteristic defined by targeting criteria associated with content for posting to the brand page; and
responsive to the user profile of the viewing user including the connection to the brand page and responsive to determining the user profile of the viewing user has the characteristic, delivering the content to an electronic device associated with the viewing user.

### Embodiment 21

The computer-implemented method of any of Embodiments 20 to 23, wherein determining whether the user profile of the viewing user from the one or more user profiles including the connection to the brand page has the characteristic defined by the targeting criteria associated with content for posting to the brand page comprises:
determining whether one or more keywords from the user profile of the viewing user match one or more keywords in the targeting criteria.

### Embodiment 22

The computer-implemented method of any of Embodiment 20 or 21, wherein determining whether the user profile of the viewing user from the one or more user profiles including the connection to the brand page has the characteristic defined by the targeting criteria associated with content for posting to the brand page further comprises:
accessing an action log including actions performed by the viewing user; and
determining whether the viewing user performed one or more actions defined by the targeting criteria.

### Embodiment 23

The computer-implemented method of Embodiment 22, wherein, determining whether the viewing user performed one or more actions defined by the targeting criteria comprises:
determining whether the viewing user interacted with content presented by the brand page.

### Embodiment 24

The computer-implemented method of any of Embodiments 20 to 23, wherein determining whether the user profile of the viewing user from the one or more user profiles including the connection to the brand page has the characteristic defined by the targeting criteria associated with content for posting to the brand page comprises:
accessing an action log including actions performed by the viewing user;
determining whether the viewing user performed one or more actions defined by the targeting criteria; and
determining whether one or more keywords from the user profile of the viewing user match one or more keywords in the targeting criteria.

### Embodiment 25

The computer-implemented method of any of Embodiments 20 to 24, wherein delivering the content to the electronic device associated with the viewing user comprises:
including a story associated with the content in a news feed sent to the electronic device associated with the viewing user.

### Embodiment 26

The computer-implemented method of any of Embodiments 20 to 25, wherein delivering the content to the electronic device associated with the viewing user comprises:
transmitting a message including the content to the electronic device.

### Embodiment 27

The computer-implemented method of any of Embodiments 20 to 26, wherein delivering the content to the electronic device associated with the viewing user comprises:
displaying the content on the brand page when the viewing user accesses the brand page with the electronic device so that the content is visually distinguishable from second content associated with targeting criteria defining a characteristic that the user profile of the viewing user does not have.

## Claims

1. A social networking system, comprising:
- a content store (310) for storing a brand page associated;
- a user profile store (305) for storing user profiles of users and a set of connections among the users, one or more of the user profiles including a connection to the brand page;
wherein the content store (310) is adapted to receive content for posting to the brand page, the content being associated with targeting criteria that defines an interest of a user of the social networking system;
- a content selector (170) for accessing the one or more user profiles including the connection to the brand page and for determining whether a user profile of a viewing user from the one or more user profiles including the connection to the brand page has the interest defined by the targeting criteria based in part on the user profile of the viewing user;
wherein the content store is adapted to deliver the content to the brand page to an electronic device (210) associated with the viewing user responsive to determining that the user profile of the viewing user has the interest.

2. The system of claim 1, wherein the user profile store (305) is adapted to store keywords associated with user profiles and wherein the content selector (170) is adapted to match a keyword of the user profile of the viewing user with a keyword in the targeting criteria for determining whether the user profile of the viewing user has the interest defined by the targeting criteria.

3. The system of one of the preceding claims, comprising:
- an action logger (315) for storing data describing one or more actions performed by a viewing user, in particular interactions between the viewing user and the brand page, in an action log, the stored data being associated with the user profile of the viewing user;
wherein the content selector (170) is adapted to determine whether the user profile of the viewing user has the interest defined by the targeting criteria based on the actions performed by the user.

4. The system of one of the preceding claims, comprising:
a news feed manager (325) being adapted to communicate with a plug-in, preferably being installed on a third party website (230), for publishing the content received by the content store (310).

5. The system of one of the preceding claims, comprising:
a display generator (335) for determining when a viewing user has requested information to be displayed, the display generator (335) being adapted to cooperate with the content selector (170) for determining whether a user profile of a viewing user from the one or more user profiles including the connection to the brand page has the interest defined by the targeting criteria based in part on the user profile of the viewing user and for delivering the content by modifying the appearance of the brand page.

6. A computer-implemented method, in particular for use in a system of one of the preceding claim, the method comprising:
storing, in a social networking system, a brand page associated with an entity;
storing one or more user profiles of users of the social networking system and a set of connections among the users, one or more of the user profiles including a connection to the brand page;
receiving content for posting to the brand page, the content associated with targeting criteria that defines an interest of a user of the social networking system;
responsive to receiving the content for posting to the brand page, accessing the one or more user profiles including the connection to the brand page;
determining whether a user profile of a viewing user from the one or more user profiles including the connection to the brand page has the interest defined by the targeting criteria based in part on the user profile of the viewing user; and
delivering, in particular by transmitting a message, the content to the brand page to an electronic device associated with the viewing user responsive to determining that the user profile of the viewing user has the interest.

7. The computer-implemented method of claim 6, wherein delivering the content comprises:
displaying the content on the brand page when the viewing user accesses the brand page with the electronic device.

8. The computer-implemented method of claim 7, wherein displaying the content on the brand page when the viewing user accesses the brand page comprises:
displaying the content so that the content is visually distinguishable from second content associated with targeting criteria defining the interest that is not included in the user profile of the viewing user.

9. The computer-implemented method of one of claims 6 to 8, wherein determining whether the user profile of the viewing user has the interest defined by the targeting criteria comprises:
matching, in particular string matching, a keyword of the user profile of the viewing user with a keyword in the targeting criteria.

10. The computer-implemented method of one of claims 6 to 9, further comprising:
storing data describing one or more interactions between the viewing user and the brand page in an action log, the stored data associated with the user profile of the viewing user.

11. The computer-implemented method of one of claims 6 to 10, wherein delivering the content to the electronic device associated with the viewing user comprises:
delivering a story associated with the content to the electronic device associated with the viewing user.

12. The computer-implemented method of one of claims 6 to 11, wherein determining whether the user profile of the viewing user has the characteristic defined by the targeting criteria comprises:
accessing an/the action log including actions performed by the viewing user; and
determining whether the user profile of the viewing user has characteristics defined by the targeting criteria based on the actions performed by the viewing user and based on the user profile of the viewing user.

13. The computer-implemented method of one of claims 6 to 12, wherein the characteristic comprises an interest and/or a demographic information and/or a membership in a group of users of the social networking system and/or an action taken by the viewing user, in particular an action taken by the viewing user comprises an interaction between the viewing user and the brand page.

14. A computer-readable storage medium storing executable computer program instructions, the instructions implementing the method of one of the claims 6 to 13 when being executed.
